Europäisches Patentamt

European Patent Office

Office européen des brevets

(11) Veröffentlichungsnummer: **0 309 842**
**A2**

(12) **EUROPÄISCHE PATENTANMELDUNG**

(21) Anmeldenummer: 88115294.6

(22) Anmeldetag: 17.09.88

(51) Int. Cl.⁴: **C08F 257/02 , C09J 7/02 ,**
**//(C08F257/02,220:12)**

(30) Priorität: 26.09.87 DE 3732538

(43) Veröffentlichungstag der Anmeldung:
05.04.89 Patentblatt 89/14

(84) Benannte Vertragsstaaten:
**DE FR GB IT**

(71) Anmelder: **BASF Aktiengesellschaft**
**Carl-Bosch-Strasse 38**
**D-6700 Ludwigshafen(DE)**

(72) Erfinder: **Rehmer, Gerd, Dr.**
**Koenigsberger Strasse 1**
**D-6712 Bobenheim-Roxheim(DE)**
Erfinder: **Druschke, Wolfgang, Dr.**
**Berliner Strasse 28**
**D-6716 Dirmstein(DE)**

(54) **Verfahren zur Herstellung stabiler Dispersionen in aliphatischen Kohlenwasserstoffen und deren Verwendung.**

(57) Die Erfindung betrifft ein Verfahren zur Herstellung stabiler Dispersionen von Polyacrylaten mit Haftklebeeigenschaften und K-Werten über 50 in aliphatischen Kohlenwasserstoffen eines Siedebereichs von 50 bis 150° C, wobei man eine Monomerenmischung (A) mit einem in aliphatischen Kohlenwasserstoffen nicht oder nur schwer löslichen olefinisch ungesättigen Polymeren (B) radikalisch bei erhöhter Temperatur polymerisiert, wobei das olefinisch ungesättigte Polymere (B) ein Molekulargewicht (Zahlenmittel) von 500 bis 50 000 und eine Hydrieriodzahl von 51 bis 0,5 hat und durch Polymerisation einer Monomerenmischung aus

Ba) 50 bis 100 Gew.% monovinylaromatischen Monomeren,

Bb) 50 bis 0 Gew.% 3 bis 6 C-Atome enthaltender monoolefinisch ungesättigter Mono- und/oder Dicarbonsäuren und/oder deren Anhydriden und

Bc) 0 bis 10 Gew.% weiteren monoolefinisch ungesättigten Monomeren

hergestellt ist, mit der Maßgabe, daß die Summe der Prozente von Ba), Bb) und Bc) 100 beträgt und die Monomerenmischung A) sich zusammensetzt aus Aa) 80 bis 100 Gew.% (Meth)acrylsäureestern 4 bis 20 C-Atome enthaltender Alkanolen,

Ab) 0 bis 10 Gew.% Vinylestern 2 bis 10 C-Atome enthaltender Alkanmonocarbonsäuren,

Ac) 0 bis 7,5 Gew.% 3 bis 6 C-Atome enthaltenden monoolefinisch ungesättigter Mono- und/oder Dicarbonsäuren und/oder deren Anhydriden und

Ad) 0 bis 10 Gew.% weiteren monoolefinisch ungesättigten Monomeren

wobei die Summe der Prozente von Aa), Ab), Ac) und Ad) jeweils 100 beträgt und das Verhältnis von (A) : (B) zwischen 39:1 und 4:1 liegt.

EP 0 309 842 A2

**Verfahren zur Herstellung stabiler Dispersionen in aliphatischen Kohlenwasserstoffen und deren Verwendung**

Bei Polyacrylat-Haftklebern handelt es sich gewöhnlich um Copolymerisate aus "harten" Monomeren, d.h. solchen, deren Homopolymerisate hohe Glastemperaturen und Kohäsion aufweisen, und "weichen" Monomeren, d.h. solchen, deren Homopolymerisate niedrige Glastemperatur und geringe Kohäsion zeigen. Durch gemeinsame Verwendung harter und weicher Monomerer in geeigneten Verhältnissen läßt sich ein hinsichtlich Kohäsion und Anfaßklebrigkeit (Tack) ausgewogenes Eigenschaftsprofil einstellen. Vielfach werden dabei Monomere mitverwendet, die funktionelle Gruppen enthalten, durch die eine Vernetzung der Polymerisate und eine höhere Kohäsion erreicht werden können. Zusätzlich werden oft Fremdvernetzer zur Erhöhung der Kohäsion zugesetzt, z.B. Melaminharze, Phenolharze, Isocyanate oder auch Metallchelatkomplexe.

Derartige Polyacrylate sind in der Regel in überwiegend aliphatischen Kohlenwasserstoffen nicht oder nur sehr schlecht löslich. Daher werden polare Lösungsmittel(gemische) verwendet, hauptsächlich Ester, wie Ethylacetat, Ketone wie Aceton und/oder Methylethylketon und/oder Alkanole, wie Ethanol oder Isopropanol.

Es ist bekannt, daß Polyacrylat-Haftkleber hohen Polymerisationsgrades in der Regel gute Kohäsionswerte zeigen, die Lösungen auch in polaren Lösungsmitteln jedoch bei Polymerisatgehalten über etwa 30 Gewichtsprozent hohe Viskositäten aufweisen und damit nicht gut zu verarbeiten sind. Demgegenüber etwas höhere Feststoffgehalte und gute Anfaßklebrigkeit lassen sich durch Verwendung von Polymer-Mischungen einstellen, deren Komponenten sich hinsichtlich der eingesetzten Monomeren und/oder des Polymerisationsgrades unterscheiden. Unter Scherbelastung der aus solchen Lösungen erhaltenen Beschichtungen beobachtet man aber häufig ein "Ausschwitzen" eines Teils der Polymeren und dadurch eine schlechte Kohäsion.

Im Hinblick auf die Verarbeitung der Haftkleber wären unpolare Lösungsmittel oder Lösungsmittelgemische von großem Vorteil, die überwiegend aus aliphatischen Kohlenwasserstoffen, z.B. Hexan oder Leichtbenzin, und zusätzlich gegebenenfalls aromatischen Kohlenwasserstoffen, wie Toluol, bestehen, die jedoch höchstens in stark untergeordnetem Maße polare Lösungsmittel der oben genannten Art enthalten, damit sie in Lösungsmittelrückgewinnungsanlagen problemlos aufgearbeitet werden können. Dagegen führen polare Lösungsmittel wegen ihrer oft erheblichen Wasserlöslichkeit häufig zu Störungen und zu Abwasserproblemen.

Die Forderung, bei Acrylathaftkleberpolymerisaten hohen Polymerisationsgrades hohe Polymerisatgehalte einzustellen und unpolare Lösungsmittel, vorwiegend aliphatische Kohlenwasserstoffe, zu verwenden, ist mit Polyacrylat-Lösungen bisher nicht realisiert worden.

Aus der DE-A-3 030 383 ist es bekannt, olefinisch ungesättigte Monomere in einer Menge von 5 bis 200 Gewichtsteilen, vorzugsweise 10 bis 150 Gewichtsteilen, in Gegenwart von 100 Gewichtsteilen eines Polymeren auf Acrylatbasis nach dem Verfahren der Lösungs- oder Substanzpolymerisation zu polymerisieren, wobei als Lösungsmittel neben polaren Lösungsmitteln auch unpolare Lösungsmittel, wie Toluol, und aliphatische Kohlenwasserstoffe, z.B. Hexan und n-Octan, eingesetzt werden. Gemische, die wenigstens 50 Gew.% Toluol enthalten, werden dabei bevorzugt. Bei diesem Verfahren fallen jedoch bei Verwendung eines größeren Anteils an Monomeren die Klebefestigkeiten stark ab.

Aus der DE-B-1 201 064 ist ein Verfahren zur Herstellung von Dispersionen bekannt, bei dem man olefinisch ungesättigte Monomere, wie Acryl- und Vinylester oder Styrol in Gegenwart eines dispergierend wirkenden in Kohlenwasserstoffen löslichen Polymerisats aus 4 bis 18 C-Atome im Alkoholrest besitzenden Acryl- und/oder Methacrylsäureestern in flüssigen Kohlenwasserstoffen radikalisch polymerisiert. Dieses Verfahren dient zur Herstellung von bis zu 55 %igen und höherkonzentrierten Polymerdispersionen, die zum Überziehen und Imprägnieren der verschiedensten Substrate, insbesondere für die Herstellung von Emaillen und Lackharzen in Frage kommen.

Ferner ist es aus der US-PS 3 617 361 bekannt, Haftklebebeschichtungen mit vernetzbaren Polyacrylat-Haftklebern herzustellen, die mit einem mindestens zum Teil gelösten Acrylatmischpolymerisat als Schutzkolloid in flüssigen Kohlenwasserstoffen dispergiert vorliegen. Kennzeichnend ist, daß das dispergierende und das dispergierte Copolymerisat Anteile an Monoestern 3 bis 5 C-Atome enthaltender, $\alpha,\beta$-olefinisch ungesättigter Carbonsäuren enthalten, und das Schutzkolloid in Mengen von 25 bis 150 Gew.%, bezogen auf das dispergierte Polyacrylat, eingesetzt wird. Mit derartigen Dispersionen lassen sich Beschichtungen erhalten, die Verklebungen hoher Wärmestandfestigkeit ergeben. Nachteilig ist jedoch, daß Filme aus diesen Dispersionen geringe Anfaßklebrigkeit haben und zur Herstellung guter Verklebungen hohe Anpreßdrucke erfordern. Ferner beobachtet man, insbesondere bei den nicht mit Vernetzerzusatz erhaltenen Beschichtungen, ein schlechtes Abzugsverhalten.

Aus der EP-PS 72 913 ist ein Verfahren zur Herstellung von Dispersionen von Polyacrylat-Haftklebern eines K-Werts über 50 in aliphatischen Kohlenwasserstoffen eines Siedebereichs von 50 bis 150° C bekannt, bei dem ein Monomerengemisch (A) aus (Meth)Acrylsäureestern in Gegenwart von 5 bis 20 Gew.% eines Vorpolymerisates (B) aus überwiegend "weichen" Acrylsäureester-Monomeren radikalisch polymerisiert wird. Das Vorpolymerisat (B), das nicht oder höchstens geringfügig durch Pfropfreaktionen als Weichmacher in das Polyacrylat eingebaut wird, beeinflußt aber die Klebstoffeigenschaften, insbesondere die Scherstandfestigkeit, nachteilig. Die Dispersionen weisen zudem eine ungenügende Lagerstabilität, besonders bei Temperaturwechsel auf.

Der vorliegenden Erfindung liegt nun die Aufgabe zugrunde, ein Verfahren zur Herstellung von Haftkleber-Benzindispersionen bereitzustellen, daß nicht die Nachteile der bekannten Verfahren aufweist.

Es wurde gefunden, daß man stabile Dispersionen von Polyacrylaten mit Haftklebeeigenschaften und K-Werten über 50 in aliphatischen Kohlenwasserstoffen eines Siedebereichs von 50 bis 150° C herstellen kann, indem man eine Monomerenmischung (A) mit einem in aliphatischen Kohlenwasserstoffen nicht oder nur schwer löslichen olefinisch ungesättigen Polymeren (B) radikalisch bei erhöhter Temperatur polymerisiert, wobei das olefinisch ungesättigte Polymere (B) ein Molekulargewicht (Zahlenmittel) von 500 bis 50 000 hat und durch Polymerisation einer Monomerenmischung aus

Ba) 50 bis 100 Gew.% monovinylaromatischen Monomeren,

Bb) 50 bis 0 Gew.% 3 bis 6 C-Atome enthaltenden monoolefinisch ungesättigten Mono- und/oder Dicarbonsäuren und/oder deren Anhydriden und

Bc) 0 bis 10 Gew.% weiteren monoolefinisch ungesättigten Monomeren

hergestellt ist, mit der Maßgabe, daß die Summe der Prozente von Ba), Bb) und Bc) 100 beträgt und sich die Monomerenmischung A zusammensetzt aus

Aa) 80 bis 100 Gew.% (Meth)acrylsäureestern 4 bis 20 C-Atome enthaltender Alkanole,

Ab) 0 bis 10 Gew.% Vinylestern 2 bis 10 C-Atome enthaltender Alkanmonocarbonsäuren,

Ac) 0 bis 7,5 Gew.% 3 bis 6 C-Atome enthaltenden monoolefinisch ungesättigten Mono- und/oder Dicarbonsäuren und/oder deren Anhydriden und

Ad) 0 bis 10 Gew.% weiteren monoolefinisch ungesättigten Monomeren

wobei die Summe der Prozente von Aa), Ab), Ac) und Ad) 100 beträgt und das Verhältnis von (A) : (B) zwischen 39:1 und 4:1 liegt.

Es ist überraschend, daß nach dem erfindungsgemäßen Verfahren stabile Polyacrylat-Dispersionen erhalten werden, deren Filme sich auch gegenüber den Filmen der Dispersionen der US-PS 3 617 361 durch hohen Tack bei guter Kohäsion, hervorragende Alterungsbeständigkeit sowie einwandfreies Abzugsverhalten bei dennoch guten Adhäsionswerten auszeichnen.

Die neuen Dispersionen haben meist eine Konzentration an dispergiertem Polyacrylat-Haftkleber von 35 bis 70 Gew.%, bevorzugt 50 bis 70 Gew.%. Als Lösungsmittel enthalten sie aliphatische Kohlenwasserstoffe eines Siedebereichs von 50 bis 150° C, z.B. Benzine, Hexan, Heptan, Cyclohexan, Octan und/oder Nonane. In manchen Fällen kann das Lösungsmittelgemisch bis zu 40 %, bevorzugt bis zu 10 Gew.%, besonders bevorzugt bis zu 1 Gew.%, auch andere Lösungsmittel, wie besonders aromatische Kohlenwasserstoffe, z.B. Toluol und/oder Xylole und/oder Solventnaphtha, sowie in untergeordnete Mengen, d.h. bis maximal 5 Gew.% des Lösungsmittels, auch Ester, wie Methylacetat, Ethylacetat, Ketone, wie Aceton, Methylethylketon, Alkohole, wie Methanol, Ethanol und Isopropanol oder Ether, wie Tetrahydrofuran oder Methylglykolacetat, enthalten. Der Anteil an aromatischen Kohlenwasserstoffen, wie bevorzugt Toluol, liegt im allgemeinen zwischen 0 und 10 Gew.%, bevorzugt unter 1 Gew.%, bezogen auf die gesamten Lösungsmittel.

Als Monomere (Aa) kommen z.B. n-Butylacrylat und -methacrylat, 2-Ethylhexylacrylat und -methacrylat, Laurylacrylat und -methacrylat, Stearylacrylat und -methacrylat und Isodecylacrylat und -methacrylat, als Monomere Ab) Vinylester, wie Vinylacetat, Vinylpropionat und Vinyl-2-ethylhexanat, in Betracht.

Geeignete Monomere Ac), sind monoolefinisch ungesättigte Mono- und/oder Dicarbonsäuren mit 3 bis 6 C-Atomen und/oder deren Anhydride, wie Acrylsäure, Methacrylsäure, Ethacrylsäure, Itaconsäure, Crotonsäure, Maleinsäure, Fumarsäure, Maleinsäureanhydrid, Methacrylsäureanhydrid, Itaconsäureanhydrid und Vinylmilchsäure.

Weitere Monomere Ad), die reaktive Gruppen tragen können, sind z.B. Maleinsäure- und Fumarsäurehalbester oder Halbamide mit 1 bis 20 C-Atomen in den Alkylresten, z.B. Maleinsäure-n-butylester, Hydroxialkylacrylate und -methacrylate, wie 2-Hydroxiethyl(meth)acrylat, 2-Hydroxipropyl(meth)acrylat, 4-Hydroxibutyl(meth)acrylat, sowie Chlorhydroxialkylacrylate, wie 3-Chlor-2-hydroxipropylacrylat, Amide olefinisch ungesättigter 3 bis 6 C-Atome enthaltender Mono- und/oder Carbonsäuren, wie Acrylamid, Methacrylamid, Maleinsäureamide, Fumarsäureamide und Maleinimid sowie deren Alkylderivate mit meist 1 bis 4 C-

3

Atome enthaltenden Alkylresten, wie N-Methyl-N-propyl- und N-n-Butylacrylamid und -methacrylamid, sowie heterocyclische Vinylverbindungen, wie Vinylimidazol, Vinylpyridine, N-Vinylpyrrolidon und N-Vinylcaprolactam.

Die Monomeren Aa), Ab), Ac) und Ad) werden ihrer Menge und Art nach im allgemeinen derart ausgewählt, daß ein daraus hergestelltes Copolymerisat meist eine Glastemperatur unter 0°C, insbesondere unter -10°C, aufweist.

Als Komponente B für die erfindungsgemäße Copolymerisation dienen olefinisch ungesättigte Polymerisate aus

a) 40 bis 100 Gew.% monovinylaromatischen Monomeren,

b) 0 bis 60 Gew.% monoethylenisch ungesättigten Carbonsäuren mit 3 bis 6 C-Atomen, und

c) 0 bis 20 Gew.% anderen monoolefinisch ungesättigten Monomeren, mit der Maßgabe, daß die Summe der Gewichtsprozente a) bis c) immer 100 beträgt, mit den oben angegebenen Monomeren. Bei den Polymerisaten B) kann es sich entweder um Homopolymerisate von monovinylaromatischen Monomeren, wie Styrol, handeln oder um Copolymerisate der monovinylaromatischen Monomeren mit einer olefinisch ungesättigten Carbonsäure oder einem Anhydrid einer monoolefinisch ungesättigten Carbonsäure.

Als Komponente Ba) der Polymerisate (B) kommen monovinylaromatische Monomere in Betracht, z.B. Styrol, $\alpha$-Methylstyrol, $\alpha$-Alkylstyrole mit 2 bis 6 C-Atomen im Alkylrest, der geradkettig und/oder verzweigt sein kann, z.B. $\alpha$-Iso-Butylstyrol. Daneben eignen sich Vinlaromaten, die außer der Vinylgruppierung am aromatischen Kern eine $C_1$- bis $C_8$-Alkylgruppe tragen, z.B. Vinyltoluol, tert.-Butylstyrol, Halogenstyrole, Kern(alkyl)substituierte $\alpha$-Alkylstyrole mit 1 bis 8 C-Atomen im Kernalkylrest und mit 1 bis 6 C-Atomen im $\alpha$-Alkylrest, z.B. para-tert.-Butyl-$\alpha$-methylstyrol. Vorzugs weise verwendet man aus dieser Monomerengruppe Styrol. Es ist zu 40 bis 100 Gew.%, vorzugsweise 60 bis 95 Gew.% am Aufbau des Polymerisates B) beteiligt.

Zu den Monomeren der Gruppe Bb) gehören monoolefinisch ungesättigte Carbonsäuren mit 3 bis 6 C-Atomen und/oder deren Anhydride, z.B. Acrylsäure, Methacrylsäure, Ethacrylsäure, Maleinsäure, Fumarsäure, Itaconsäure, Maleinsäureanhydrid, Itaconsäureanhydrid, Vinylmilchsäure, Vinylphosphonsäure und Vinylsulfonsäure. Diese Monomeren werden entweder allein oder in Mischung eingesetzt. Vorzugsweise verwendet man aus dieser Gruppe von Monomeren Acrylsäure, Methacrylsäure, Maleinsäureanhydrid und Itaconsäureanhydrid. Die Monomeren dieser Gruppe sind zu 0 bis 51, vorzugsweise 5 bis 40 Gew.%, insbesondere 15 bis 30 Gew.%, am Aufbau der Polymerisate B) beteiligt.

Außer den Monomeren der Gruppen Ba) und Bb) können noch gegebenenfalls bis zu 20 Gew.% andere monoolefinisch ungesättigte Monomere in den Polymerisate B) einpolymerisiert sein. Zu dieser Gruppe von Monomeren gehören beispielsweise die Ester der Acrylsäure, Methacrylsäure und/oder Ethacrylsäure, die sich von Alkanolen mit 1 bis 12 C-Atomen ableiten, z.B. Methylacrylat, Methylmethacrylat, tert.-Butylcyclohexylacrylat, tert.-Butylcyclohexylmethacrylat, Cyclohexylacrylat, Cyclohexylmethacrylat, tert.-Butylacrylat, tert.-Butylmethacrylat, n-Butylacrylat, n-Butylmethacrylat, Isobutylacrylat, Isobutylmethacrylat, 2-Ethylhexylacrylat, 2-Ethylhexylmethacrylat sowie Vinylester von gesättigten aliphatischen Carbonsäuren, die 2 bis 10 C-Atome enthalten, z.B. Vinylacetat, Vinylpropionat, Vinyllaurat, Vinylbutyrat und Vinylstearat. Eine andere Gruppe von Monomeren sind die Amide von Methacrylsäure, Acrylsäure und Ethacrylsäure. Hierbei kann es sich beispielsweise um Methacrylamid oder Acrylamid sowie um N-substituierte Amide, wie Methacrylsäure-N-tert.butylamid oder Acrylsäure-N-tert.-butylamid handeln. Eine weitere Klasse von Monomeren, die gegebenenfalls am Aufbau des Polymerisats B) beteiligt sind, sind Acrylnitril und Methacrylnitril. Die Monomeren der Gruppe der Bc) können entweder allein oder in Mischung in Mengen bis zu 20 Gew.% im Copolymerisat B) einpolymerisiert sein. Die Summe der Angaben in Prozent von Ba), Bb) und Bc) beträgt jeweils 100.

Die Polymerisate (B) haben ein Molekulargewicht (Zahlenmittel) von 500 bis 50 000 und Hydrierjodzahlen (nach DIN 53 241) von 0,5 bis 51, vorzugsweise 1,3 bis 12,7, insbesondere 5 bis 8,5. Das Molekulargewicht (Zahlenmittel) der Polymerisate B) beträgt vorzugsweise 2000 bis 20 000, insbesondere 3000 bis 5000. Vorzugsweise werden solche Polymerisate B) eingesetzt, die in aliphatischen Kohlenwasserstoffen eines Siedebereichs von 50 bis 150°C schwer löslich sind. Die Polymerisate (B) haben im allgemeinen Erweichungstemperaturen (gemessen nach DIN 53 180 und/oder DIN/ISO 4625) von 80 bis 200°C, vorzugsweise von 80 bis 180°C.

Derartige Polymerisate (B) sind bekannt. Sie werden beispielsweise durch Homo- oder Copolymerisation der Monomeren Ba) bis Bc) in Substanz bei 180°C bis 400°C, vorzugsweise 200 bis 300°C hergestellt. Besonders bevorzugt ist die kontinuierliche Substanzpolymerisation der Monomeren, die in dem angegebenen Temperaturbereich und insbesondere bei 200 bis 260°C und Drücken von 1 bis 100,

4

vorzugsweise 20 bis 50 bar in Abwesenheit von Polymerisationsinitiatoren oder auch in Gegenwart von Polymerisationsinitiatoren und Polymerisationsinhibitoren durchgeführt werden kann. Solche Polymerisationsverfahren sind beispielsweise aus den DE-OSen 3 026 831 und 3 046 476, der US-PS 4 042 768 und der WO-Anmeldung 82/2387 bekannt.

Bei der Durchführung der erfindungsgemäßen Copolymerisation wird zu einer Lösung des monoolefinisch ungesättigten Polymeren B, die den Polymerisationsinitiator oder einen Teil des Polymerisationsinitiators und gegebenenfalls einen feinverteilten geringen Anteil von meist weniger als 10 Gew.% von (ungelöstem) Polymerisat B enthält, die Monomermischung (A) gegeben.

Die Menge des Polymerisationsinitiators beträgt im allgemeinen 0,01 bis 5 Gew.%, insbesondere 0,05 bis 4 Gew.%, bezogen auf die Menge des monoolefinisch ungesättigten Polymeren B + der Monomeren Aa) + Ab) + Ac) + Ad). Geeignete Polymerisationsinitiatoren sind z.B. Azoisobutyronitril, Perester, wie Tertiärbutylperpivalat, Teriärbutylperoctoat, Tertiärbutylperneodecanoat und Tertiärbutylperbenzoat, Peroxide, wie Dibenzoylperoxid und Dilauroylperoxid, Hydroperoxide, wie Cumolhydroperoxid, sowie Peroxidicarbonate, wie Dicyclohexylperoxidicarbonat. Der Polymerisationsinitiator kann z.B. in Form einer Lösung beispielsweise in flüssigen aliphatischen oder aromatischen Kohlenwasserstoffen gleichzeitig getrennt oder im Gemisch mit den Monomeren zugegeben werden. Die Lösung (oder Dispersion) des Polymerisats (B) und gegebenenfalls des Polymerisationsinitiators wird im allgemeinen vor oder während der Zugabe der Monomeren Aa) bis Ad) auf Reaktionstemperatur erhitzt. Diese liegt meist in einem Bereich von 50 bis 150°C, insbesondere von 60 bis 120°C. Man kann unter Druck oder auch bei Normaldruck und gegebenenfalls unter Rückfluß der Monomeren und Kohlenwasserstoffe arbeiten. In manchen Fällen ist es auch von Vorteil, das olefinisch ungesättigte Polymere (B) im Reaktionsansatz nur zum Teil, z.B. in Mengen von 10 bis 60 Gew.%, bezogen auf die Gesamtmenge des Polymerisats B zuzusetzen und den Rest zusammen mit den Monomeren Aa) bis Ad) oder getrennt davon dem Reaktionsgemisch zuzugeben. Das Mengenverhältnis von Monomeren (A) zu Polymeren (B) bei der erfindungsgemäßen Polymerisation beträgt 39:1 bis 4:1, meist 39:1 bis 5,7:1, vorzugsweise 39:1 bis 9:1 und insbesondere 39:1 bis 12,3:1.

Als Lösungsmittel zur Herstellung der Lösung (bzw. Dispersion) des ungesättigten Polymeren (B) eignen sich besonders Ketone, wie Aceton, Methylethylketon, Ester, wie Essigsäureethylester, Alkohole, z.B. Methanol, Ethanol und iso-Propanol, aromatische Kohlenwasserstoffe, wie Toluol, o-, m-, p-Xylol, Benzol, sowie Gemische aus den genannten Lösungsmitteln.

Die Monomeren (A) können als solche oder gelöst in aliphatischen Kohlenwasserstoffen dem Reaktionsgemisch zugesetzt werden.

Während der Polymerisation können die aliphatischen Kohlenwasserstoffe auch getrennt von den Monomeren dem Reaktionsgemisch zugesetzt werden. Auch kann ein Teil der aliphatischen Kohlenwasserstoffe während der Polymerisation, und der Rest nach der Polymerisation dem Ansatz zugesetzt werden. Während der Polymerisation, scheidet sich das Copolymerisat in Form von sehr fein dispergierten Teilchen aus dem Reaktionsgemisch ab, wie dies bei Emulsionspolymerisationen üblich ist. Dabei betragen die mittleren Teilchendurchmesser meist 0,1 bis 100 µm.

Bei einer besonderen Ausführungsform werden die zur Herstellung der Lösung des olefinisch ungesättigten Polymeren (B) verwendeten Lösungsmittel, wie Aceton, nach der Polymerisation abdestilliert. Derartige Dispersionen enthalten weniger als 10 Gew.%, bevorzugt weniger als 5 Gew.%, besonders bevorzugt weniger als 2,5 Gew.%, ganz besonders bevorzugt weniger als 1,0 Gew.%, bezogen auf den Lösungsmittelanteil der Dispersion, nicht aliphatische Kohlenwasserstoffe.

Der gewünschte Polymergehalt der neuen Dispersionen kann durch Zugabe von aliphatischen Kohlenwasserstoffen bei Raumtemperatur oder bei höherer Temperatur, bevorzugt 60 bis 120°C eingestellt werden. Er beträgt im allgemeinen über 45 Gew.%, bevorzugt über 50 Gew.%, insbesondere 60 bis 70 Gew.%, wobei die erfindungsgemäß hergestellten Copolymerisate meist einen K-Wert über 60 aufweisen.

In einer bevorzugten Ausführungsform, besonders zur Herstellung hochkohäsiver Haftkleber, verwendet man olefinisch ungesättigte Polymere (B), die neben 50 bis 92 Gew.%, bevorzugt 76 bis 84 Gew.% Monovinylaromaten, 50 bis 8 Gew.%, bevorzugt 24 bis 16 Gew.% Acrylsäure und/oder Methacrylsäure einpolymerisiert enthalten, in deren Gegenwart eine Monomermischung (A) erfindungsgemäß polymerisiert wird, die weniger als 2,5 Gew.%, bevorzugt weniger als 1 Gew.%, insbesondere keine säuregruppenhaltigen olefinisch ungesättigten Monomeren enthält, wobei das olefinisch ungesättigte Polymere (B), in einer Menge von 5 bis 15 Gew.%, bevorzugt 7,5 bis 12,5 Gew.%, insbesondere 9 bis 11 Gew.%, bezogen auf das erfindungsgemäße Copolymerisat, eingesetzt wird, und nach erfolgter Polymerisation die Säuregruppen bevorzugt zu 50 bis 10 %, insbesondere zu 25 bis 15 % mit Basen voll- oder teilneutralisiert werden. Zur Neutralisation eignen sich besonders die Alkalihydroxid und/oder Alkalialkoholate, wie Lithium-, Natrium- und Kaliumhydroxid, Natriummethanolat und -ethanolat, Kalium-tert.-butylanolat, sowie alkaliorganische Verbindungen wie n-Butyllithium.

Die Basen können entweder pulverisiert, in fester Form oder bevorzugt als Lösung eingesetzt werden, wobei für die Hydroxide vorwiegend Alkanole, wie Methanol und Ethanol, für die Alkoholate, die entsprechenden Alkanole in Frage kommen. Bevorzugt werden nach der Voll- und Teilneutralisation die verwendeten Lösungsmittel dieser Art von den gebildeten Reaktionsprodukten abdestilliert und der abdestillierte Lösungsmittelanteil durch aliphatische Kohlenwasserstoffe ersetzt.

Nach Abschluß der Polymerisation können die restlichen Monomeren gegebenenfalls in an sich üblicher Weise abgetrennt oder ihr Anteil durch erneute Zugabe von weiterem Polymerisationsinitiator oder durch Erhitzen weiter vermindert werden. Man erhält dann nach dem Abkühlen feinteilige Dispersionen, die sehr lagerstabil sind und farblose Klebefilme mit hohem Tack und hoher Kohäsion ergeben. Die Dispersionen enthalten vorzugsweise über 60 Gew.% von Copolymerisaten, deren K-Werte im allgemeinen im Bereich von 55 bis 90 liegen. Die Viskositäten der Dispersionen betragen meist bis 10 000 mPa•s (gemessen mit einem Epprecht-Rheometer bei 23° C).

Die nach dem neuen Verfahren hergestellten nichtwäßrigen Polyacrylat-Dispersionen mit Haftklebeeigenschaften können in an sich üblicher Weise modifiziert und/oder konfektioniert werden, wobei z.B. übliche klebrigmachende Harze, wie hydrierte Kohlenwasserstoffharze, gegebenenfalls modifizierte Kolophoniumharze, Terpenphenolharze, Ketonharze, Aldehydharze, Kumaron-Inden-Harze, Weichmacher auf Basis von Mono-, Di- oder Polyesterverbindungen polychlorierte Kohlenwasserstoffe oder Paraffinöle, Farbstoffe, Pigmente, Stabilisatoren, wie tert.-Butylhydrochinon oder andere Stoffe mit klebenden Eigenschaften, wie Natur- oder Synthesekautschuk, Polyvinylether, Polybutadienöle oder andere Haftklebebindemittel zugegeben werden können. Auch können den Polyacrylatdispersionen vernetzend wirkende Stoffe in geringen Mengen zugefügt werden, insbesondere wenn die Copolymerisate reaktionsfähige Gruppen aufweisen. Hierfür eignen sich besonders Melaminharze, Phenolharze, Polyisocyanate, Polyepoxide, Orthoester oder Chelatester von 2- bis 4-wertigen Metallen, wie Titan oder Aluminium, wie sie beispielsweise in den US-PSen 3 769 254 und 4 121 028 oder den DE-OSen 2 649 544 und 2 416 991 beschrieben sind.

Die nach dem neuen Verfahren hergestellten Dispersionen von Copolymerisaten mit haftklebenden Eigenschaften eignen sich zur Herstellung von Haftklebe-Beschichtungen und -Überzügen, insbesondere zur Herstellung von Haftklebebändern und -folien. Dabei können die Dispersionen in an sich üblicher Weise durch Streichen, Spritzen, Walzen, Rakeln oder Gießen auf die üblichen flächigen Substrate aufgebracht werden, beispielsweise auf Papier, Pappe, Zellstoff, Holz, Metalle oder Folien, z.B. auf gegebenenfalls weichgemachtes PVC, Polyethylen, Polypropylen, Polyamid oder Polyethylenglykolterephthalat. Von den frisch hergestellten Überzügen oder Beschichtungen können die Lösungsmittel leicht, gegebenenfalls bei Raumtemperatur oder wenig erhöhten Temperaturen, im allgemeinen bei Temperaturen von 20 bis 120° C, vorzugsweise von 50 bis 80° C, abgedampft werden, wobei man gutklebende Überzüge erhält, die eine hohe Kohäsion und eine gute Schälfestigkeit bei vorzüglicher Alterungsbeständigkeit aufweisen. Das Trocknen der Überzüge und Beschichtungen kann in an sich üblicher Weise unter Verwendung z.B. von Heizstrahlern oder Warmluftwälzvorrichtungen erfolgen. In manchen Fällen ist es dabei zur Beschleunigung des vollständigen Abdampfens der Lösungsmittel vorteilhaft, auf Temperaturen von 70° C und darüber, z.B. auf 120° C zu erwärmen, da Restgehalte an Lösungsmitteln die Kohäsion der Klebefilme vermindern können.

Die Klebeeigenschaften von flächigen Substraten, die eine Haftklebebeschichtung aufweisen, können durch Messen der Scherfestigkeit als Maß für die Kohäsion und der Schälfestigkeit als zusammenfassendes Maß für Kohäsion und Oberflächenklebrigkeit erfaßt werden. Für die Prüfung werden Folien aus Polyethylenglykolterephthalat mit den erfindungsgemäß hergestellten Polyacrylat-Dispersionen derart beschichtet, daß sich eine Trockenschichtdicke von 25 μm ergibt. Die Lösungsmittel werden 5 Minuten bei 120° C und 1 bar abgedampft. Die getrockneten, beschichteten Folien werden in 2 cm breite Streifen geschnitten und diese Streifen auf eine verchromte Messingplatte aufgebracht. Die Platte wird dann mit dem Streifen 24 Stunden bei 23° C und 65 % relativer Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird eine verklebte Fläche von 20 x 25 mm zurechtgeschnitten, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23° C durchgeführt. Alle Messungen werden 3-fach gemacht.

Die in den folgenden Beispielen angegebenen Teile und Prozente beziehen sich auf das Gewicht. Die Bestimmung der K-Werte erfolgte nach dem von H. Fikentscher, Cellulosechemie 13 (1932), Seite 28 ff., bzw. DIN 53 726 angegebenen Verfahren in 1 %iger Lösung in Tetrahydrofuran bei 25° C. Die Messung der Viskositäten erfolgte in einem Epprecht-Rheometer mit dem Meßbecher C bei 20° C. Die Bestimmung der Molekulargewichte erfolgte dampfdruckosmometrisch in Aceton nach üblichen Methoden.

Beispiel 1

Zu einer Lösung von 750 g eines olefinisch ungesättigten Polymeren (B) das 76 Gew.% Styrol und 24 Gew.% Methacrylsäure einpolymerisiert enthält, mit einem Molekulargewicht (Zahlenmittel) von 4600 und einer Hydrieriodzahl von 10 (nach DIN 53 421), in 400 g Aceton gibt man 300 g Benzin vom Siedebereich 60 bis 95° C (z.B. Shell Spezialbenzin 60/95) und erwärmt die Mischung auf Rückflußtemperatur.

Innerhalb 2 Stunden läßt man eine Lösung von 4250 g n-Butylacrylat in 1300 g Benzin des Siedebereichs 60 bis 95° C und gleichzeitig eine Lösung von 100 g tert.-Butylperoctoat in 800 g Benzin vom Siedebereich 60 bis 95° C zulaufen. Nach beendeter Zugabe polymerisiert man unter Rückfluß noch 2 Stunden nach und gibt bei Raumtemperatur noch 530 g des Benzins zu.

Man erhält eine stabile Dispersion mit einem Feststoffgehalt von 60 Gew.%, die ein Copolymerisat eines K-Werts von 63 enthält und eine Viskosität von 8000 mPas hat.

Beispiel 2

Man verfährt wie in Beispiel 1 angegeben, destilliert aber nach beendeter Nachpolymerisation das Aceton ab und gibt bei Rückflußtemperatur Benzin des Siedebereich 60 bis 95° C zu, bis ein Feststoffgehalt von 52 Gew.% erreicht ist. Das Polymerisat hat einen K-Wert von 61 und die stabile Dispersion eine Viskosität von 6 000 mPas.

Beispiel 3

Man verfährt wie in Beispiel 2 angegeben, fügt aber nach der Destillation des Acetons das Benzin unter Rühren bei Raumtemperatur zu, bis ein Feststoffgehalt von 45 Gew.% erreicht ist. Das Polymerisat hat den K-Wert 65 und die stabile Dispersion eine Viskosität von 2250 mPas.

Beispiel 4

Zu einer Lösung von 125 g eines olefinisch ungesättigten Polymeren (B), das 84 Gew.% Styrol und 16 Gew.% Acrylsäure einpolymerisiert enthält und ein Molekulargewicht (Zahlenmittel) von 3600 und eine Hydrieriodzahl von 7 aufweist, in 400 g Aceton, gibt man 300 g n-hexanarmes Benzin vom Siedebereich 60 bis 95° C (z.B. EXSOL D 60/95 S) und erwärmt auf Rückflußtemperatur.

Innerhalb 2 Stunden läßt man eine Lösung von 4000 g n-Butylacrylat, 700 g 2-Ethylhexylacrylat, 125 g 2-Hydroxipropylacrylat, 25 g Acrylsäure und 25 g 2-Ketobutylmethacrylat, gelöst in 1300 g n-hexanarmem Benzin vom Siedebereich 60 bis 95° C und gleichzeitig, jedoch innerhalb 2 1/2 Stunden eine Lösung von 100 g tert.-Butylperpivalat in 800 g des n-hexanarmen Benzins zulaufen. Anschließend rührt man noch 2 Stunden unter Rückfluß. Unter Rückfluß gibt man anschließend 350 g des n-hexanarmen Benzins zu.

Man erhält eine stabile Dispersion des Feststoffgehalts 65 Gew.% und einer Viskosität von 9000 mPas. Das Copolymerisat hat den K-Wert 67,5.

Beispiel 5

Man verfährt wie in Beispiel 4 angegeben, destilliert aber nach der Polymerisation das Aceton und 200 g Benzin ab und ersetzt bei Raumtemperatur des abdestillierte Lösungsmittel durch die gleiche Menge n-hexanarmes Benzin des Siedebereichs 80 bis 140° C (z.B. Shellsol 80/140-hexanarm).

Man erhält eine stabile 65 %ige Dispersion einer Viskosität von 7000 mPas, die ein Copolymerisat des K-Werts 65 enthält.

7

Beispiel 6

Zu der Dispersion des Beispiels 5 gibt man 2 %, bezogen auf das Copolymerisat, Diphenylmethandiisocyanat.

Man bestimmt dann die Klebewerte wie oben angegeben und erhält die in Tabelle 1 angegebenen Werte.

Tabelle 1

| Beispiel | Scherfestigkeit | Schälfestigkeit [N/2cm] | |
|---|---|---|---|
| | | sofort | n 24 h |
| 1 | > 50 | 2,6 | 6,0 |
| 4 | > 10 | 4,0 | 7,2 |
| 6 | > 70 | 3,0 | 6,5 |

Beispiel 7

Man verfährt wie in Beispiel 5 angegeben, gibt aber nach beendeter Polymerisation soviel einer 5 %igen methanolischen Kaliumhydroxidlösung zu, daß 25 % der Carboxylgruppen neutralisiert werden.

Man erhält gleichfalls eine stabile Dispersion, deren Viskosität 6500 mPas beträgt.

Stabilitätsprüfung

Zur Stabilitätsprüfung wurden jeweils 1 kg der Benzindispersion in einer dicht schließenden Flasche wie angegeben gelagert. Lagerung I: 6 Monate bei 20° C

II: 8 Wochen bei -10° C und 2 Tage bei 20° C

III: 8 Wochen bei -10° C und 6 Monate bei 20° C

Tabelle 2

| Stabilitätsprüfung der Dispersionen nach Lagerung | | | |
|---|---|---|---|
| Beispiel | I | II | III |
| 1 | + + | + | + + |
| 2 | + + | + | + |
| 3 | + + | + | + |
| 4 | + + | - | + |
| 5 | + + | - | + |
| 8 | + + | - | - |
| Hierin bedeuten | | | |
| + + sehr gut : kein Bodensatz; neigt nicht zum Absetzen | | | |
| + gut : kein Bodensatz; geringe Absetzneigung | | | |
| - ausreichend: geringer Bodensatz; Absetzneigung: Bodensatz leicht dispergierbar | | | |

**Ansprüche**

1. Verfahren zur Herstellung stabiler Dispersionen von Polyacrylaten mit Haftklebeeigenschaften und K-Werten über 50 in aliphatischen Kohlenwasserstoffen eines Siedebereichs von 50 bis 150°C, dadurch gekennzeichnet, daß man eine Monomerenmischung (A) mit einem in aliphatischen Kohlenwasserstoffen nicht oder nur schwer löslichen olefinisch ungesättigen Polymeren (B) radikalisch bei erhöhter Temperatur polymerisiert, wobei das olefinisch ungesättigte Polymere (B) ein Molekulargewicht (Zahlenmittel) von 500 bis 50 000 und eine Hydrieriodzahl von 51 bis 0,5 hat und durch Polymerisation einer Monomerenmischung aus

Ba) 50 bis 100 Gew.% monovinylaromatischen Monomeren,

Bb) 50 bis 0 Gew.% 3 bis 6 C-Atome enthaltender monoolefinisch ungesättigter Mono- und/oder Dicarbonsäuren und/oder deren Anhydriden und

Bc) 0 bis 10 Gew.% weiteren monoolefinisch ungesättigten Monomeren

hergestellt ist, mit der Maßgabe, daß die Summe der Prozente von Ba), Bb) und Bc) 100 beträgt und die Monomerenmischung A) sich zusammensetzt aus Aa) 80 bis 100 Gew.% (Meth)acrylsäureestern 4 bis 20 C-Atome enthaltender Alkanole,

Ab) 0 bis 10 Gew.% Vinylestern 2 bis 10 C-Atome enthaltender Alkanmonocarbonsäuren,

Ac) 0 bis 7,5 Gew.% 3 bis 6 C-Atome enthaltenden monoolefinisch ungesättigten Mono- und/oder Dicarbonsäuren und/oder deren Anhydriden und

Ad) 0 bis 10 Gew.% weiteren monoolefinisch ungesättigten Monomeren

wobei die Summe der Prozente von Aa), Ab), Ac) und Ad) jeweils 100 beträgt und das Verhältnis von (A) : (B) zwischen 39:1 und 4:1 liegt.

2. Verfahren gemäß Anspruch 1, dadurch gekennzeichnet, daß das olefinisch ungesättigte Polymere (B) eine Glastemperatur über 50°C hat.

3. Verwendung der nach den Ansprüchen 1 und 2 hergestellten Polyacrylat-Dispersionen zur Herstellung von Haftklebebändern und -folien.